# FASCICULE DE BREVET EUROPEEN

(11) **EP 3 623 646 B1**
(45) Date de publication et mention de la délivrance du brevet: **09.11.2022**
(21) Numéro de dépôt: 19195808.1
(22) Date de dépôt: 06.09.2019
(51) Int. Cl.: F16B 5/02, F16B 19/02, F16B 35/04, F16B 43/02, B64C 1/26

(54) **DISPOSITIF DE LIAISON A SIMPLE CISAILLEMENT POURVU D'UN AXE EXCENTRIQUE ET D'UN MANCHON EXCENTRIQUE, ENSEMBLE MÉCANIQUE COMPORTANT UN TEL DISPOSITIF ET PROCÉDÉ D'ASSEMBLAGE**
VERBINDUNGSVORRICHTUNG MIT EINFACHER SCHERUNG, DIE MIT EINER EXZENTRISCHEN ACHSE UND EINER EXZENTRISCHEN MUFFE AUSGESTATTET IST, MECHANISCHE EINHEIT, DIE EINE SOLCHE VORRICHTUNG UMFASST, UND ZUSAMMENBAUVERFAHREN
LINKING DEVICE WITH SINGLE SHEARING PROVIDED WITH AN OFF-CENTRE AXIS AND AN OFF-CENTRE SLEEVE, MECHANICAL ASSEMBLY COMPRISING SUCH A DEVICE AND ASSEMBLY METHOD

(30) Priorité: 13.09.2018 FR 1858209
(43) Date de publication de la demande: 18.03.2020
(73) Titulaire: AIRBUS (SAS), 31707 Blagnac (FR)
(72) Inventeur: BRINDEAU, Jean-Mickael, 31700 BLAGNAC (FR); AQUILA, André, 31700 CORNEBARRIEU (FR); RUSCASSIE, Benoit, 31700 BLAGNAC (FR)
(74) Mandataire: Gevers & Orès

(56) Documents cités:
- EP-A1- 1 672 231
- DE-A1- 19 719 915
- DE-A1-102012 021 102
- US-A- 4 444 365
- US-A- 5 779 260
- US-A1- 2017 045 080

## Description

### DOMAINE TECHNIQUE

La présente invention concerne un dispositif de liaison destiné à lier ensemble deux pièces mécaniques distinctes. Le document US 4 444 365 A divulgue un dispositif de liaison connu.

### ÉTAT DE LA TECHNIQUE

Un tel dispositif de liaison peut être utilisé dans tout domaine, notamment aéronautique mais non exclusivement, nécessitant une opération d'assemblage structural entre deux pièces (ou structures) mécaniques présentant un certain jeu.

Bien que non exclusivement, la présente invention peut s'appliquer plus particulièrement à la fixation de pièces mécaniques sur un aéronef en particulier sur un avion de transport, et en particulier à la fixation d'un module de plancher dans le fuselage d'un aéronef.

Pour réduire le temps de fabrication d'un aéronef, il est envisagé de réaliser des opérations parallèlement, notamment en développant des modularités. Pour ce faire, des modules sont préfabriqués et préassemblés, avant d'être intégrés dans la structure du fuselage de l'aéronef, tardivement dans le processus de fabrication. Ce mode d'assemblage peut, notamment, concerner un ou plusieurs modules de plancher. A cet effet, chaque module de plancher peut être équipé de conduites d'eau, de câblages électriques, de gaines d'aération, de panneaux de sol,....

Pour intégrer efficacement un tel module de plancher complètement équipé dans le fuselage, les interfaces (ou points de liaison) entre le module et le fuselage doivent être connectés le plus rapidement possible, à l'aide de dispositifs de liaison. La fixation doit également être propre et être apte à compenser d'éventuels jeux. En effet, il apparaît généralement des jeux aux différents points de liaison, dus à des géométries imparfaites et/ou à des défauts d'alignement de pièces ou de trous.

Il est intéressant de pouvoir disposer d'un dispositif de liaison permettant de réaliser un assemblage permettant de compenser des jeux, généralement de quelques millimètres, et cela sans avoir à réaliser d'opérations d'ajustement ou de perçages pour disposer d'un assemblage propre dans la phase d'assemblage finale, qui peut être réalisé rapidement.

### EXPOSÉ DE L'INVENTION

La présente invention concerne un dispositif de liaison destiné à lier ensemble deux pièces mécaniques, qui permet de réaliser une liaison rapide, propre et apte à compenser efficacement des jeux.

Selon l'invention, ledit dispositif de liaison comporte au moins :
- un axe excentrique comprenant au moins un premier tronçon cylindrique destiné à être inséré dans un trou circulaire d'une première desdites pièces mécaniques et une second tronçon cylindrique, lesdits premier et second tronçons cylindriques présentant des axes de révolution différents ; et
- un manchon excentrique comprenant au moins un cylindre creux pourvu d'une surface cylindrique externe et d'une surface cylindrique interne, la surface cylindrique externe étant destinée à être insérée dans un trou circulaire de la seconde desdites pièces mécaniques et la surface cylindrique interne étant destinée à recevoir le second tronçon cylindrique de l'axe excentrique, lesdites surfaces cylindriques interne et externe présentant des axes de révolution différents.

De préférence, bien que non exclusivement, ledit dispositif de liaison comporte de plus :
- un premier élément de blocage apte à bloquer en rotation l'axe excentrique ; et
- un second élément de blocage apte à bloquer en rotation le manchon excentrique.

Ainsi, grâce aux caractéristiques de double excentricité due à l'axe excentrique et du manchon excentrique (destiné à être monté sur l'axe excentrique) qui coopèrent, on dispose d'une tolérance réglable entre le premier tronçon de l'axe excentrique (destiné à être inséré dans le trou circulaire d'une première desdites pièces) et la surface cylindrique externe (destinée à être insérée dans le trou circulaire de la seconde desdites pièces mécaniques). Cette tolérance est réglable par la rotation du manchon excentrique sur l'axe excentrique. Ainsi, par un positionnement adéquat en rotation du manchon excentrique sur l'axe excentrique, on est en mesure de compenser un éventuel jeu entre les deux trous circulaires (superposés) des pièces mécaniques à lier ensemble. Ce positionnement en rotation, une fois réglé, est fixé par les premier et second éléments de blocage.

Le dispositif de liaison permet ainsi de réaliser une liaison (ou assemblage) qui est en mesure de compenser d'éventuels jeux et ceci sans avoir à réaliser d'opérations d'ajustement ou de perçages, ce qui permet d'obtenir une liaison propre et de réaliser l'assemblage rapidement.

Dans un mode de réalisation préféré, le premier élément de blocage comprend une première plaquette pourvue d'une ouverture circulaire à bord interne cranté, destinée à enserrer un bord périphérique cranté de forme complémentaire dudit axe excentrique, ladite première plaquette étant apte à être fixée.

De plus, dans un mode de réalisation préféré, le second élément de blocage comprend une seconde plaquette pourvue d'une ouverture circulaire à bord interne cranté, destinée à enserrer un bord périphérique cranté de forme complémentaire dudit manchon excentrique, ladite seconde plaquette étant apte à être fixée.

Avantageusement, les premier et second tronçons cylindriques de l'axe excentrique sont raccordés directement l'un à l'autre longitudinalement.

En outre, de façon avantageuse, ledit axe excentrique est pourvu à l'une de ses extrémités longitudinales d'une tête et à l'autre de ses extrémités longitudinales d'un tronçon fileté destiné à recevoir un écrou.

Selon l'invention, le manchon excentrique comprend un tronçon supplémentaire destiné à recevoir un tronçon cylindrique supplémentaire de l'axe excentrique.

La présente invention concerne également un ensemble mécanique (ou assemblage mécanique) qui comporte une première pièce mécanique, une seconde pièce mécanique et un dispositif de liaison tel que celui décrit ci-dessus, qui lie ensemble lesdites première et seconde pièces mécaniques.

Avantageusement, le premier élément de blocage est fixé sur la première pièce mécanique et le second élément de blocage est fixé sur la seconde pièce mécanique.

La présente invention concerne, en outre, un procédé d'assemblage de deux pièces mécaniques, à l'aide d'un dispositif de liaison tel que celui décrit ci-dessus, lesdites pièces mécaniques étant pourvues chacune d'au moins un trou circulaire.

Selon l'invention, ledit procédé d'assemblage comprend des étapes consistant successivement au moins :
- à amener les pièces mécaniques l'une contre l'autre en superposant leurs trous circulaires ;
- à insérer l'axe excentrique et le manchon excentrique dans ces trous circulaires superposés et les amener dans une position relative en rotation permettant de compenser le cas échéant un jeu ; et
- à bloquer en rotation l'axe excentrique et le manchon excentrique, à l'aide des éléments de blocage.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en coupe et légèrement en perspective, d'un mode de réalisation particulier d'un dispositif de liaison liant ensemble deux pièces mécaniques ;
- la figure 2 est une vue éclatée, en perspective, de deux pièces mécaniques et des différents éléments d'un dispositif de liaison destiné à lier ensemble ces deux pièces mécaniques ;
- la figure 3 est une vue en perspective d'un axe excentrique ;
- la figure 4 est une vue en perspective d'un manchon excentrique ;
- les figures 5 et 6 sont des vues, en perspective, d'un ensemble mécanique comprenant deux pièces mécaniques partiellement superposées et un dispositif de liaison qui les lie ensemble, en regardant respectivement d'un côté et de l'autre du dispositif de liaison ; et
- la figure 7 illustre schématiquement les étapes principales d'un procédé d'assemblage d'un tel ensemble mécanique.

### DESCRIPTION DÉTAILLÉE

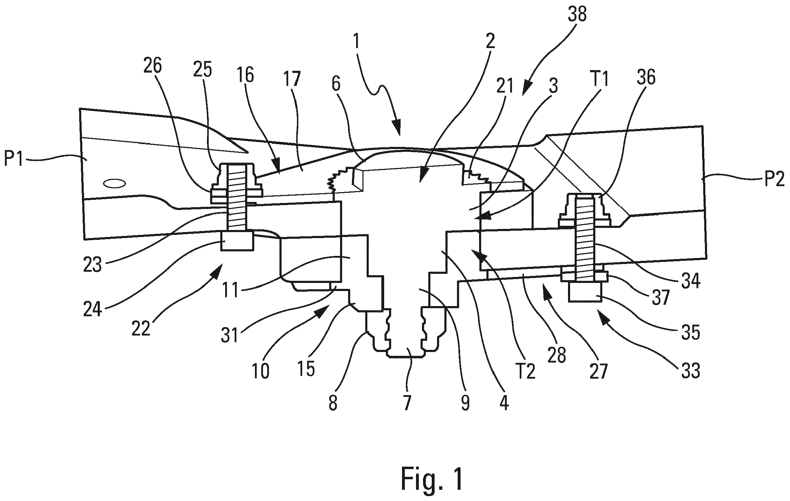

Le dispositif de liaison 1, représenté schématiquement dans un mode de réalisation particulier sur la figure 1, est destiné à réaliser une liaison entre deux pièces mécaniques P1 et P2 distinctes.

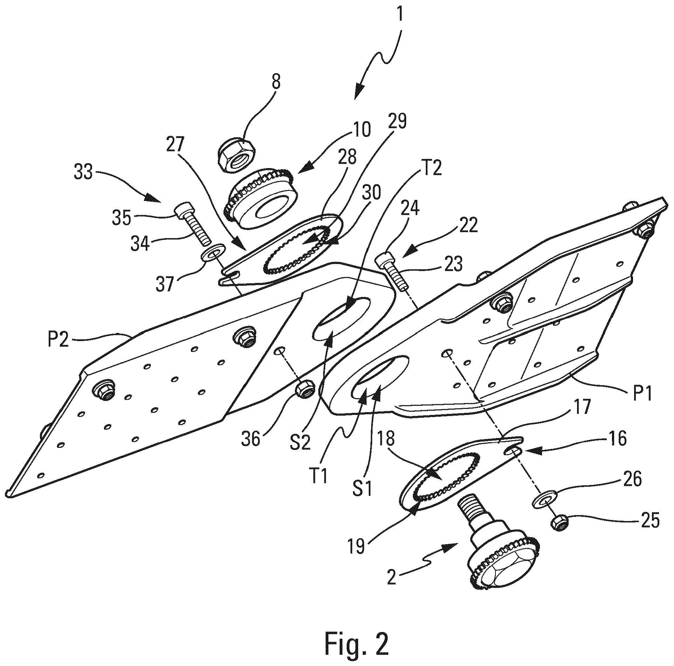

Les pièces mécaniques P1 et P2 sont pourvues, chacune, d'au moins un trou circulaire T1, T2, comme montré sur la figure 2. Pour l'assemblage, les deux pièces mécaniques P1 et P2 sont amenées l'une en contact de l'autre de manière à superposer les trous circulaires T1 et T2 de préférence de même diamètre, par l'intermédiaire desquels le dispositif de liaison 1 lie ensemble lesdites pièces mécaniques P1 et P2.

Pour ce faire, le dispositif de liaison 1 comporte, comme représenté sur les figures 1 et 2, un axe excentrique 2 plein.

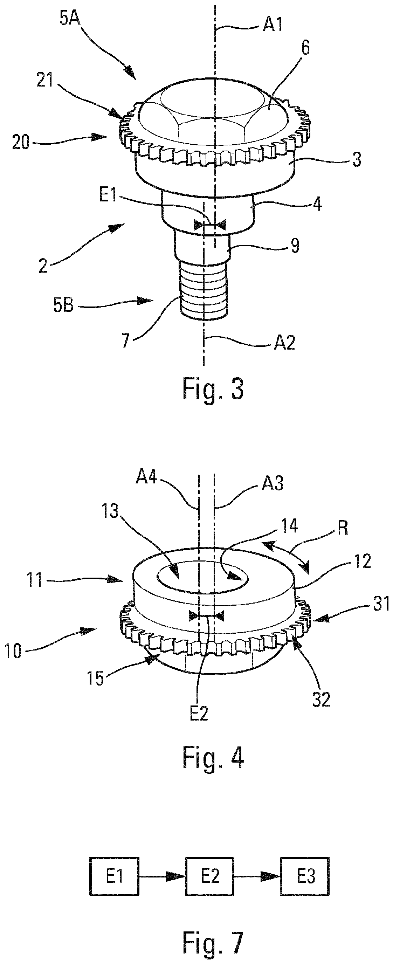

L'axe excentrique 2 comprend notamment, comme montré sur la figure 3 :
- un tronçon cylindrique 3 réalisé sous forme d'un cylindre droit et circulaire qui présente un axe (central) de révolution A1 ; et
- un tronçon cylindrique 4 réalisé sous forme d'un cylindre droit et circulaire qui présente un axe (central) de révolution A2.

Les tronçons cylindriques 3 et 4 sont raccordés directement l'un à l'autre, longitudinalement (à savoir dans la direction desdits axes de révolution A1 et A2).

L'axe 2 est dit excentrique, car les deux axes de révolution A1 et A2 sont différents, c'est-à-dire non coaxiaux, tout en étant parallèles l'un à l'autre. En d'autres termes, les centres des sections transversales circulaires des tronçons cylindriques 3 et 4 sont différents, c'est-à-dire décalés l'un par rapport à l'autre, comme illustré sur la figure 3 par un écartement (ou décalage) E1 (dans un plan orthogonal auxdits axes de révolution A1 et A2 parallèles).

Le tronçon cylindrique 3 de l'axe excentrique 2 est destiné à être inséré dans un trou circulaire d'une desdites pièces mécaniques P1 et P2 à lier ensemble, à savoir dans le trou circulaire T1 de la pièce mécanique P1 dans l'exemple des figures 1 et 2, en étant en contact de la surface interne S1 du trou circulaire T1.

Comme représenté sur la figure 3, l'axe excentrique 2 est pourvu, à l'une 5A de ses deux extrémités longitudinales 5A et 5B, d'une tête 6 (par exemple de type hexagonale), et à l'autre 5B de ses deux extrémités longitudinales 5A et 5B, d'un tronçon fileté 7 destiné à recevoir un écrou 8 (figure 2). L'axe excentrique 2 comprend également, entre le tronçon cylindrique 4 et le tronçon fileté 7, un tronçon cylindrique 9 de raccord réalisé sous forme d'un cylindre droit et circulaire (d'axe de révolution A2).

Le dispositif de liaison 1 comporte, de plus, un manchon excentrique 10. Comme représenté sur la figure 4, le manchon excentrique 10 est un cylindre creux. Ce manchon excentrique 10 comprend un tronçon cylindrique 11 pourvu d'une surface cylindrique externe (ou périphérique) 12 et d'une ouverture interne cylindrique 13. L'ouverture interne cylindrique 13 délimite une surface cylindrique interne 14.

Dans le cadre de la présente invention, les adjectifs « interne » et « externe » sont définis, pour un tronçon cylindrique ou un cylindre, radialement par rapport à l'axe (central) de révolution de ce tronçon cylindrique ou de ce cylindre, respectivement vers cet axe de révolution (pour « interne ») et en s'écartant de cet axe de révolution (« pour externe »).

Le manchon 10 est dit excentrique, car la surface cylindrique externe 12 et la surface cylindrique interne 14 présentent des axes de révolution A3 et A4 qui sont également différents, c'est-à-dire non coaxiaux, tout en étant parallèles l'un à l'autre. En d'autres termes, les centres des sections transversales circulaires des surfaces cylindriques externe et interne 12 et 14 sont différents, c'est-à-dire décalés l'un par rapport à l'autre, comme illustré sur la figure 4 par un écartement (ou décalage) E2 (dans un plan orthogonal auxdits axes de révolution A3 et A4 parallèles).

Le tronçon cylindrique 11 du manchon excentrique 10 est destiné à être inséré dans un trou circulaire de l'autre pièce mécanique, à savoir dans le trou circulaire T2 de la pièce mécanique P2 dans l'exemple des figures 1 et 2, avec la surface cylindrique externe 12 en contact de la surface interne S2 du trou circulaire T2.

En outre, l'ouverture interne cylindrique 13 du manchon excentrique 10 est destinée à recevoir le tronçon cylindrique 4 de l'axe excentrique 2.

Ainsi, grâce à l'axe excentrique 2 et au manchon excentrique 10 (qui est destiné à être monté sur l'axe excentrique 2), on dispose sur le dispositif de liaison 1 d'une double excentricité, avec un écartement E1 et un écartement E2. On dispose, ainsi, d'une tolérance réglable entre le tronçon cylindrique 3 de l'axe excentrique 2 (destiné à être inséré dans le trou circulaire T1 de la pièce mécanique P1) et le tronçon cylindrique 11 de surface cylindrique externe 12 du manchon excentrique 10 (destiné à être inséré dans le trou circulaire T2 de la pièce mécanique P2). Cette tolérance est réglable par la rotation, dans l'un ou l'autre sens (comme illustré par une double flèche R sur la figure 4), du manchon excentrique 10 sur l'axe excentrique 2. Ainsi, par un positionnement relatif adéquat en rotation entre le manchon excentrique 10 et l'axe excentrique 2, on est en mesure de compenser un éventuel jeu entre les deux trous circulaires T1 et T2 (superposés) des pièces mécaniques P1 et P2 à lier ensemble, et ainsi de bloquer les pièces mécaniques P1 et P2 l'une par rapport à l'autre, en cisaillement.

Le dispositif de liaison 1 permet, par conséquent, de réaliser une liaison (ou un assemblage) qui est en mesure de compenser d'éventuels jeux dus, notamment, à une géométrie imparfaite des trous circulaires T1 et T2 et/ou à un désalignement de ces trous circulaires T1 et T2 quand ils sont superposés, et ceci sans avoir à réaliser d'opérations d'ajustement ou de perçages, ce qui permet d'obtenir une liaison propre et de réaliser l'assemblage rapidement.

Le manchon excentrique 10 comprend également un tronçon 15 (figure 4), dont les surfaces interne et externe présentent par exemple des diamètres inférieurs à ceux des surfaces interne et externe du tronçon 11 et qui est destiné à recevoir le tronçon cylindrique 9 de l'axe excentrique 2, comme représenté sur la figure 1.

Lorsque le positionnement approprié en rotation (entre le manchon excentrique 10 et l'axe excentrique 2) est obtenu, l'ensemble est bloqué en rotation. Pour ce faire, le dispositif de liaison 1 comporte un élément de blocage 16 destiné à bloquer en rotation l'axe excentrique 2.

Dans un mode de réalisation préféré, l'élément de blocage 16 comprend, comme représenté sur la figure 2, une plaquette 17. Cette plaquette 17 est pourvue d'une ouverture circulaire 18 présentant un bord interne 19 cranté. De plus, l'axe excentrique 2 comprend une couronne périphérique 20 agencée entre le tronçon cylindrique 3 et la tête 6, comme représenté sur la figure 3. Cette couronne périphérique 20 comprend un bord périphérique (ou externe) 21 cranté de forme complémentaire au bord interne 19 cranté de l'ouverture circulaire 18.

Pour réaliser le blocage, la plaquette 17 est positionnée de sorte que le bord interne 19 cranté de l'ouverture circulaire 18 enserre le bord périphérique 21 cranté de forme complémentaire de la couronne périphérique 20 de l'axe excentrique 2. Puis, la plaquette 17 est fixée sur la pièce mécanique P1, à l'aide de moyens de fixation usuels. Dans l'exemple des figures 1 et 2, la plaquette 17 est fixée à l'aide d'un boulon 22 comportant une tige filetée 23 pourvue d'une tête 24 et un écrou 25 qui est vissé sur la tige filetée 23. De plus, une rondelle 26 est agencée entre la tête 24 et la plaquette 17.

Pour réaliser le blocage en rotation entre le manchon excentrique 10 et l'axe excentrique 2, le dispositif de liaison 1 comporte également un élément de blocage 27 destiné à bloquer en rotation le manchon excentrique 10.

Dans un mode de réalisation préféré, l'élément de blocage 27 comprend, comme représenté sur la figure 2, une plaquette 28. Cette plaquette 28 est pourvue d'une ouverture circulaire 29 présentant un bord interne 30 cranté. De plus, le manchon excentrique 10 comprend une couronne périphérique 31 agencée entre les tronçons 11 et 15, comme représenté sur la figure 4. Cette couronne périphérique 31 comprend un bord périphérique (ou externe) 32 cranté de forme complémentaire au bord interne 30 cranté de l'ouverture circulaire 29.

Pour réaliser le blocage, la plaquette 28 est positionnée de sorte que le bord interne 30 cranté de l'ouverture circulaire 29 enserre le bord périphérique 32 cranté de forme complémentaire de la couronne périphérique 31 du manchon excentrique 10. Puis, la plaquette 28 est fixée sur la pièce mécanique P2, à l'aide de moyens de fixation usuels. Dans l'exemple des figures 1 et 2, la plaquette 28 est fixée à l'aide d'un boulon 33 comportant une tige filetée 34 pourvue d'une tête 35 et un écrou 36 qui est vissé sur la tige filetée 34. De plus, une rondelle 37 est agencée entre la tête 35 et la plaquette 28.

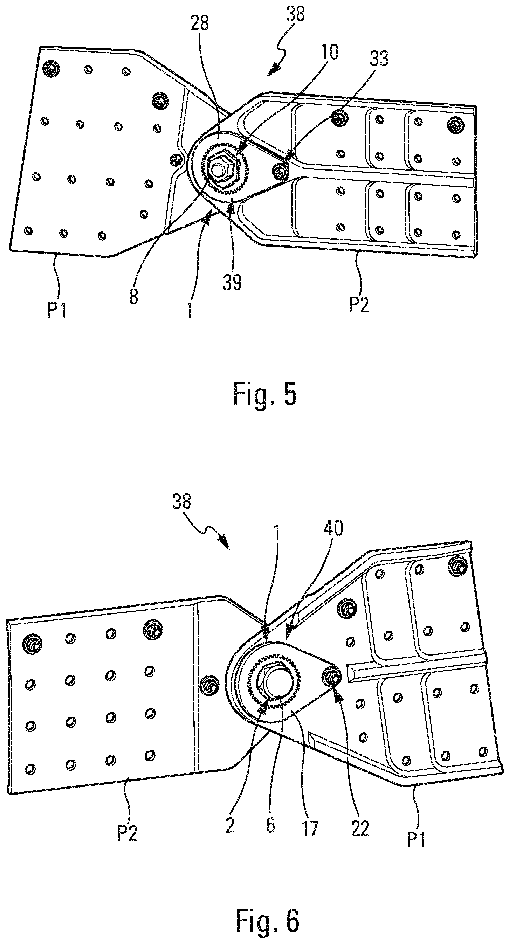

Les figures 5 et 6 montrent un ensemble (ou assemblage) mécanique 38 illustrant la liaison telle que réalisée. Cet ensemble mécanique 38 comporte un assemblage formé de la pièce mécanique P1, de la pièce mécanique P2 et du dispositif de liaison 1 tel que décrit ci-dessus, qui lie ensemble ces pièces mécaniques P1 et P2. La figure 5 illustre la vue d'un côté 39 de l'ensemble mécanique 38, montrant notamment l'écrou 8, et la figure 6 illustre l'autre côté 40 de l'ensemble mécanique 38, montrant notamment la tête 6 de l'axe excentrique 2.

Le dispositif de liaison 1 est un dispositif à simple cisaillement, le cisaillement étant l'état de contrainte interne de l'ensemble mécanique 38, dans lequel chacune des pièces mécaniques P1 et P2 a tendance, sous l'effet de forces de sens contraire, à glisser l'une par rapport à l'autre

Le dispositif de liaison 1, tel que décrit ci-dessus, est assemblé aux deux pièces mécaniques P1 et P2 pour former l'ensemble mécanique 38 des figures 5 et 6, à l'aide d'un procédé d'assemblage représenté sur la figure 7.

Ce procédé d'assemblage comprend, notamment, les étapes suivantes :
- une étape E1 consistant à amener les pièces mécaniques P1 et P2 l'une contre l'autre en superposant leurs trous circulaires T1 et T2 ;
- une étape E2 consistant à insérer l'axe excentrique 2 et le manchon excentrique 10 dans ces trous circulaires T1 et T2 superposés, le manchon excentrique 10 entourant l'axe excentrique 2, et à les amener dans une position relative en rotation permettant de compenser, le cas échéant, un jeu ; et
- une étape E3 consistant à bloquer en rotation l'axe excentrique 2 et le manchon excentrique 10, à l'aide des éléments de blocage 16 et 27, et à fixer longitudinalement l'axe excentrique 2 (et ainsi également le manchon excentrique 10) en vissant l'écrou 8 sur la tige filetée 7 dudit axe excentrique 2.

Une application préférée dudit dispositif de liaison 1 concerne la fixation d'un module sur un aéronef, en particulier sur un avion de transport, et notamment la fixation d'un module de plancher dans le fuselage de l'aéronef. A cet effet, le module de plancher peut être équipé de conduites d'eau, de câblages électriques, de gaines d'aération, de panneaux de sol,.... Dans ce cas, le module de plancher est fixé dans le fuselage de l'aéronef au niveau d'une pluralité de points de fixation, dont au moins certains (et de préférence l'ensemble) utilisent des dispositifs de liaison 1 tels que celui décrit ci-dessus. Pour ce faire, le module de plancher équipé est déplacé en étant guidé par des détecteurs dans le fuselage, et il est amené dans sa position définitive à l'intérieur du fuselage. Puis, il est fixé audit fuselage à ladite pluralité de points de fixation.

Dans cette application, à chaque point de fixation comprenant un ensemble mécanique 38, la pièce mécanique P1 fait partie du fuselage ou correspond à une pièce fixée audit fuselage et la pièce mécanique P2 fait partie du module de plancher ou correspond à une pièce fixée audit module de plancher, ou inversement.

Le dispositif de liaison 1, tel que décrit ci-dessus, présente de nombreux avantages. En particulier, il permet d'obtenir :
- une liaison apte à compenser localement des écarts de fabrication et/ou d'alignement sans avoir à réaliser d'opérations d'ajustement ;
- une liaison rapide, car la mise en place du dispositif de liaison 1 peut être réalisée rapidement, puisqu'elle ne nécessite pas notamment d'opérations d'ajustement, ni de perçages ; et
- une liaison propre, car aucun perçage n'est nécessaire et la mise en place du dispositif de liaison 1 ne génère pas de déchets.

## Revendications

1. Dispositif de liaison destiné à lier ensemble deux pièces mécaniques, ledit dispositif comportant au moins :
- un axe excentrique (2) comprenant au moins un premier tronçon cylindrique (3) destiné à être inséré dans un trou circulaire (T1) d'une première (P1) desdites pièces mécaniques (P1, P2) et un second tronçon cylindrique (4), lesdits premier et second tronçons cylindriques (3, 4) présentant des axes de révolution (A1, A2) différents ; et
- un manchon excentrique (10) comprenant au moins un cylindre creux (11) pourvu d'une surface cylindrique externe (12) et d'une surface cylindrique interne (14), la surface cylindrique externe (12) étant destinée à être insérée dans un trou circulaire (T2) de la seconde (P2) desdites pièces mécaniques (P1, P2) et la surface cylindrique interne (14) étant destinée à recevoir le second tronçon cylindrique (4) de l'axe excentrique (2), lesdites surfaces cylindriques externe et interne (12, 14) présentant des axes de révolution (A3, A4) différents,
ledit dispositif étant **caractérisé en ce que** le manchon excentrique (10) comprend un tronçon (15) supplémentaire destiné à recevoir un tronçon cylindrique (9) supplémentaire de l'axe excentrique (2).

2. Dispositif de liaison selon la revendication 1,
**caractérisé en ce qu'**il comporte de plus :
- un premier élément de blocage (16) apte à bloquer en rotation l'axe excentrique (2) ; et
- un second élément de blocage (27) apte à bloquer en rotation le manchon excentrique (10).

3. Dispositif de liaison selon la revendication 2,
**caractérisé en ce que** le premier élément de blocage (16) comprend une première plaquette (17) pourvue d'une ouverture circulaire (18) à bord interne (19) cranté, destinée à enserrer un bord périphérique (21) cranté de forme complémentaire dudit axe excentrique (2), ladite première plaquette (17) étant apte à être fixée.

4. Dispositif de liaison selon l'une des revendications 2 et 3,
**caractérisé en ce que** le second élément de blocage (27) comprend une seconde plaquette (28) pourvue d'une ouverture circulaire (29) à bord interne (30) cranté, destinée à enserrer un bord périphérique (32) cranté de forme complémentaire dudit manchon excentrique (10), ladite seconde plaquette (27) étant apte à être fixée.

5. Dispositif de liaison selon l'une quelconque des revendications précédentes,
**caractérisé en ce que** les premier et second tronçons cylindriques (3, 4) sont raccordés directement l'un à l'autre longitudinalement.

6. Dispositif de liaison selon l'une quelconque des revendications précédentes,
**caractérisé en ce que** ledit axe excentrique (2) est pourvu à l'une (5A) de ses extrémités longitudinales (5A, 5B) d'une tête (6) et à l'autre (5B) de ses extrémités longitudinales (5A, 5B) d'un tronçon fileté (7) destiné à recevoir un écrou (8).

7. Ensemble mécanique,
**caractérisé en ce qu'**il comporte une première pièce mécanique (P1), une seconde pièce mécanique (P2) et un dispositif de liaison (1) tel que celui spécifié sous l'une quelconque des revendications 1 à 6, qui lie ensemble lesdits première et seconde pièces mécaniques (P1, P2).

8. Ensemble mécanique selon la revendication 7, comportant un dispositif de liaison (1) selon l'une des revendications 2 à 4,
**caractérisé en ce que** le premier élément de blocage (16) est fixé sur la première pièce mécanique (P1) et **en ce que** le second élément de blocage (27) est fixé sur la seconde pièce mécanique (P2).

9. Procédé d'assemblage de deux pièces mécaniques, à l'aide d'un dispositif de liaison (1) tel que celui spécifié sous l'une quelconque des revendications 1 à 6, lesdites pièces mécaniques (P1, P2) étant pourvues chacune d'au moins un trou circulaire (T1, T2),
**caractérisé en ce qu'**il comprend des étapes (E1, E2, E3) consistant successivement au moins :
- à amener les pièces mécaniques (P1, P2) l'une contre l'autre en superposant leurs trous circulaires (T1, T2) ;
- à insérer l'axe excentrique (2) et le manchon excentrique (10) dans ces trous circulaires (T1, T2) superposés et les amener dans une position relative en rotation permettant de compenser le cas échéant un jeu ; et
- à bloquer en rotation l'axe excentrique (2) et le manchon excentrique (10), à l'aide des éléments de blocage (16, 27).

## Patentansprüche

1. Verbindungsvorrichtung, die dazu vorgesehen ist, zwei mechanische Teile miteinander zu verbinden, wobei die Vorrichtung mindestens Folgendes umfasst:
- eine exzentrische Achse (2), umfassend mindestens einen ersten zylinderförmigen Abschnitt (3), der dazu vorgesehen ist, in eine kreisförmige Öffnung (T1) eines ersten (P1) der mechanischen Teile (P1, P2) eingesetzt zu werden, und einen zweiten zylinderförmigen Abschnitt (4), wobei der erste und der zweite zylinderförmige Abschnitt (3, 4) unterschiedliche Drehachsen (A1, A2) aufweisen; und
- eine exzentrische Muffe (10), umfassend mindestens einen Hohlzylinder (11), der mit einer äußeren zylinderförmige Fläche (12) und einer inneren zylinderförmigen Fläche (14) versehen ist, wobei die äußere zylinderförmige Fläche (12) dazu vorgesehen ist, in eine kreisförmige Öffnung (T2) des zweiten (P2) der mechanischen Teile (P1, P2) eingesetzt zu werden und die innere zylinderförmige Fläche (14) dazu vorgesehen ist, den zweiten zylinderförmigen Abschnitt (4) der exzentrischen Achse (2) aufzunehmen, wobei die äußere und der innere zylinderförmige Abschnitt (12, 14) unterschiedliche Drehachsen (A3, A4) aufweisen,
wobei die Vorrichtung **dadurch gekennzeichnet ist, dass** die exzentrische Muffe (10) einen zusätzlichen Abschnitt (15) umfasst, der dazu vorgesehen ist, einen zusätzlichen zylinderförmigen Abschnitt (9) der exzentrischen Achse (2) aufzunehmen.

2. Verbindungsvorrichtung nach Anspruch 1,
**dadurch gekennzeichnet, dass** sie weiter umfasst:
- ein erstes Sperrelement (16), das geeignet ist, die exzentrische Achse (2) zu arretieren; und
- ein zweites Sperrelement (27), das geeignet ist, die exzentrische Muffe (10) zu arretieren.

3. Verbindungsvorrichtung nach Anspruch 2,
**dadurch gekennzeichnet, dass** das erste Sperrelement (16) eine erste Scheibe (17) umfasst, die mit einer kreisförmigen Öffnung (18) mit verzahntem Innenrand (19) versehen ist, der dazu vorgesehen ist, einen verzahnten Umfangsrand (21) mit komplementärer Form der exzentrischen Achse (2) einzuspannen, wobei die erste Scheibe (17) geeignet ist, befestigt zu werden.

4. Verbindungsvorrichtung nach einem der Ansprüche 2 und 3,
**dadurch gekennzeichnet, dass** das zweite Sperrelement (27) eine zweite Scheibe (28) umfasst, die mit einer kreisförmigen Öffnung (29) mit verzahntem Innenrand (30) versehen ist, der dazu vorgesehen ist, einen verzahnten Umfangsrand (32) mit komplementärer Form der exzentrischen Muffe (10) einzuspannen, wobei die zweite Scheibe (27) geeignet ist, befestigt zu werden.

5. Verbindungsvorrichtung nach einem der vorstehenden Ansprüche,
**dadurch gekennzeichnet, dass** der erste und der zweite zylinderförmige Abschnitt (3, 4) längslaufend direkt aneinander verbunden sind.

6. Verbindungsvorrichtung nach einem der vorstehenden Ansprüche,
**dadurch gekennzeichnet, dass** die exzentrische Achse (2) an einem (5A) ihrer Längsenden (5A, 5B) mit einem Kopf (6) und an dem anderen (5B) ihrer Längsenden (5A, 5B) mit einem gewundenen Abschnitt (7) versehen ist, der dazu vorgesehen ist, eine Schraubenmutter (8) aufzunehmen.

7. Mechanische Anordnung,
**dadurch gekennzeichnet, dass** sie ein erstes mechanisches Teil (P1), ein zweites mechanisches Teil (P2) und eine Verbindungsvorrichtung (1) wie jene, die in einem der Ansprüche 1 bis 6 spezifiziert ist, umfasst, die das erste und das zweite mechanische Teil (P1, P2) miteinander verbindet.

8. Mechanische Anordnung nach Anspruch 7, umfassend eine Verbindungsvorrichtung (1) nach einem der Ansprüche 2 bis 4,
**dadurch gekennzeichnet, dass** das erste Sperrelement (16) auf dem ersten mechanischen Teil (P1) befestigt ist und dass das zweite Sperrelement (27) auf dem zweiten mechanischen Teil (P2) befestigt ist.

9. Verfahren zur Montage von zwei mechanischen Teilen mithilfe einer Verbindungsvorrichtung (1) wie jene, die in einem der Ansprüche 1 bis 6 spezifiziert ist, wobei die mechanischen Teile (P1, 2P) jeweils mit mindestens einer kreisförmigen Öffnung (T1, T2) versehen sind,
**dadurch gekennzeichnet, dass** es Schritte (E1, E2, E3) umfasst, die aufeinanderfolgend aus mindestens bestehen aus einem:
- Führen der mechanischen Teile (P1, P2) zueinander durch Überlagern ihrer kreisförmigen Öffnungen (T1, T2);
- Einsetzen der exzentrischen Achse (2) und der exzentrischen Muffe (10) in diese überlagerten kreisförmigen Öffnungen (T1, T2) und Führen dieser in eine relative Drehposition, die erlaubt, soweit erforderlich ein Spiel auszugleichen; und
- Arretieren der exzentrischen Achse (2) und der exzentrischen Muffe (10) mithilfe der Sperrelemente (16, 27).

## Claims

1. Connection device intended to connect together two mechanical parts, said device comprising at least:
- one eccentric pin (2) comprising at least a first cylindrical segment (3) intended to be inserted into a circular hole (T1) of a first (P1) of said mechanical parts (P1, P2) and a second cylindrical segment (4), said first and second cylindrical segments (3, 4) having different axes of revolution (A1, A2); and
- one eccentric sleeve (10) comprising at least one hollow cylinder (11) provided with an outer cylindrical surface (12) and an inner cylindrical surface (14), the outer cylindrical surface (12) being intended to be inserted into a circular hole (T2) of the second (P2) of said mechanical parts (P1, P2) and the inner cylindrical surface (14) being intended to receive the second cylindrical segment (4) of the eccentric pin (2), said inner and outer cylindrical surfaces (12, 14) having different axes of revolution (A3, A4),
said device being **characterized in that** the eccentric sleeve (10) comprises an additional segment (15) intended to receive an additional cylindrical segment (9) of the eccentric pin (2).

2. Connection device according to claim 1,
**characterized in that** it further comprises:
- a first locking element (16) that is able to lock the eccentric pin (2) in rotation; and
- a second locking element (27) that is able to lock the eccentric sleeve (10) in rotation.

3. Connection device according to claim 2,
**characterized in that** the first locking element (16) comprises a first plate (17) provided with a circular opening (18) having a notched inner edge (19), intended to surround a notched peripheral edge (21) of complementary shape of said eccentric pin (2), said first plate (17) being able to be fixed.

4. Connection device according to one of the claims 2 and 3,
**characterized in that** the second locking element (27) comprises a second plate (28) provided with a circular opening (29) having a notched inner edge (30), intended to surround a notched peripheral edge (32) of complementary shape of said eccentric sleeve (10), said second plate (28) being able to be fixed.

5. Connection device according to any of the preceding claims,
**characterized in that** the first and second cylindrical segments (3, 4) are joined directly to one another longitudinally.

6. Connection device according to any of the preceding claims,
**characterized in that** said eccentric pin (2) is provided, at one (5A) of its longitudinal ends (5A, 5B), with a head (6) and, at the other (5B) of its longitudinal ends (5A, 5B), with a threaded segment (7) intended to receive a nut (8).

7. Mechanical assembly,
**characterized in that** it comprises a first mechanical part (P1), a second mechanical part (P2) and a connection device (1) as specified in any of the claims 1 to 6, which connects together said first and second mechanical parts (P1, P2).

8. Mechanical assembly according to claim 7, comprising a connection device (1) according to one of the claims 2 to 4,
**characterized in that** the first locking element (16) is fixed on the first mechanical part (P1) and **in that** the second locking element (27) is fixed on the second mechanical part (P2).

9. Method for assembling two mechanical parts, using a connection device (1) as specified in any of the claims 1 to 6, said mechanical parts (P1, P2) being each provided with at least one circular hole (T1, T2),
**characterized in that** it comprises steps (E1, E2, E3) consisting in successively at least:
- bringing the mechanical parts (P1, P2) against one another while superposing their circular holes (T1, T2);
- inserting the eccentric pin (2) and the eccentric sleeve (10) into these superposed circular holes (T1, T2) and bringing them into a relative rotational position which serves to compensate for any play; and
- locking the eccentric pin (2) and the eccentric sleeve (10) in rotation using the locking elements (16, 27).
